(19) Europäisches Patentamt
European Patent Office
Office européen des brevets

(11) EP 1 974 903 A1

# (12) EUROPEAN PATENT APPLICATION

(43) Date of publication:
**01.10.2008 Bulletin 2008/40**

(51) Int Cl.:
***B32B 1/08*** (2006.01) ***F16L 11/08*** (2006.01)

(21) Application number: **08153398.6**

(22) Date of filing: **27.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.03.2007 JP 2007089645**
**29.03.2007 JP 2007089646**

(71) Applicant: **TOKAI RUBBER INDUSTRIES, LTD.**
**Komaki-shi,**
**Aichi, 485-8550 (JP)**

(72) Inventor: **Takagi, Yuji**
**Komaki-shi, Aichi-ken 485-8550 (JP)**

(74) Representative: **Vossius & Partner**
**Siebertstrasse 4**
**81675 München (DE)**

## (54) Low gas-permeable hose

(57) A low gas-permeable hose (10) has an inner rubber layer (16), a reinforcing multilayer portion (17) including a first reinforcing layer (18) and a second reinforcing layer (22) on an outer side of the inner rubber layer (16), an outer rubber layer (24) on an outer side of the reinforcing multilayer portion (17), resin layer (12) defining an innermost layer; and a barrier layer (14) on an timer side of the inner rubber layer (16) and on an outer side of the resin layer (12). The barrier layer (14) is a resin membrane of polyvinyl alcohol. The reinforcing multilayer portion (17) has a cooperative reinforcing structure for ensuring the second reinforcing layer (22) of reinforcement to the first reinforcing layer (18).

FIG.1

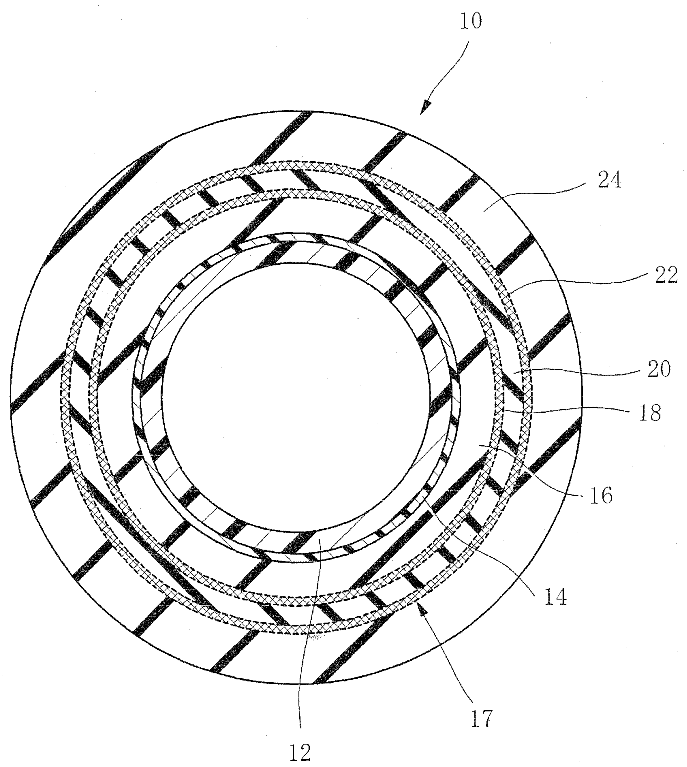




Printed by Jouve, 75001 PARIS (FR)

## Description

The present invention relates to a low gas-permeable hose suitable for a refrigerant conveying hose such as an air conditioner hose, a fuel cell hose, or a fuel hose.

Conventionally, a hose predominantly-comprised of a rubber layer has been widely used for various applications as an industrial hose or an automotive hose.

One of major purposes for using such hose is to absorb vibration by the hose.

For example, a piping hose disposed in an engine compartment of an automobile serves to absorb vibration of an engine, vibration of a compressor of an air conditioner (in the case of an air conditioner hose, namely a refrigerant conveying hose) or various vibrations associated with a moving vehicle, and to restrain transmission of vibration from one to the other of members that are connected each other by the hose.

The hose provided predominantly-comprised of the rubber layer is excellent also in easiness of handling and assembly according to a piping layout due to high flexibility of the hose when adapted for connecting piping system components in an engine compartment, etc. of an automobile.

And now, for a refrigerant conveying hose such as an air conditioner hose, permeation resistance (low permeability) to a refrigerant gas as an internal fluid has been increasingly demanded in recent years in view of an environmental protection, but a conventional rubber hose cannot fully meet such demand.

Then, for example, Patent Document 1 as below discloses a hose including an innermost layer made of polyamide resin that provides permeation resistance to gas of an internal fluid.

By the way, although chlorofluorocarbon (CFC) had been conventionally used for refrigerant of an air conditioner, use of CFC has now been banned since CFC depletes the ozone layer in the atmosphere. Use of substitution of CFC such as R134a is also going to be restrained. Then, carbon dioxide ($CO_2$) refrigerant is now highlighted as another substitution of CFC, and is studied for practical use.

However, $CO_2$ refrigerant has extremely high tendency to migrate through a hose compared to refrigerants that have been conventionally used. Therefore, a conventional low gas-permeable hose having permeation resistance to conventional refrigerant gas cannot sufficiently restrain permeation of $CO_2$ refrigerant.

Since this $CO_2$ refrigerant inherently exhibits lower performance as a cooling medium compared to conventional refrigerants, when $CO_2$ refrigerant migrates and is lost through the hose, cooling performance of an air conditioner is lowered.

Patent Document 2 as below discloses a refrigerant conveying hose including a barrier layer that is constructed by spirally winding a metal foil strip around a rubber layer to enhance permeation resistance to a refrigerant. However, in the hose including the metal layer at a middle position in a thickness direction of the hose, flexibility of the hose is impaired, and the barrier layer of metal with a different nature is apt to peel off in a long period of time due to deformation of the hose, etc., under repeated actions of internal pressures resulting that permeation resistance of the hose cannot ensured.

Under the foregoing circumstances, developed is a hose including a gas barrier layer of a resin membrane disposed at a middle position in a thickness direction of the hose. The resin membrane, namely the barrier layer is made of polyvinyl alcohol (PVOH, for example, with a saponification degree equal to or higher than 90%) having an excellent permeation resistance (low permeability) to gas. This hose is disclosed in a prior patent application (Japanese Patent Application No. 2006-151305).

PVOH has been known since long time ago as a material that is almost impermeable to various gases such as carbon oxide gas, nitrogen gas and oxygen gas and has excellent gas barrier properties. Based on this technical information, devised is a hose including a resin membrane of PVOH disposed at a middle position in a thickness-direction of the hose that serves as a barrier layer.

And it was confirmed that the hose was provided with an excellent permeation resistance also to $CO_2$ refrigerant by the resin membrane of PVOH (the barrier layer).

This low gas-permeable hose with the barrier layer of the PVOH resin membrane is very promising as a $CO_2$ refrigerant conveying hose that is expected to be used in near future.

However, the low gas-permeable hose with the gas barrier layer of PVOH resin membrane involves a new problem as follows.

Typically, the resin layer to be formed at a suitable position in the thickness direction of the hose is laminated on or over a rubber layer or the like by extrusion. However, it is difficult to apply a typical extrusion process to PVOH resin since PVOH resin has a melting point of 230°C and a decomposition temperature of about 270°C, namely, its melting point is proximate to its decomposition temperature.

On the other hand, PVOH resin exceptionally has a characteristic property of solubility in a warm or hot water (also in alcohol such as methanol and ethanol). Then, the inventor of the present invention focused on this characteristic property of PVOH resin and devised a method for forming a resin membrane of PVOH at a position in a thickness-direction of a hose. According to the method, a layer of resin (to be an innermost layer) is provided, a coating fluid is prepared by dissolving PVOH resin powder in a warm water, the coating fluid is applied on an outer surface of the layer

of resin by dipping the layer of resin in the coating fluid, water of a solvent medium in the coating fluid on the outer surface of the layer of resin is evaporated and removed in a subsequent drying process, and thereby the resin membrane of PVOH is formed on the outer surface of the layer of resin.
This method of forming the resin membrane is also disclosed in the prior patent application.
Then, subsequent steps such as of forming a rubber layer by extrusion and of forming reinforcing layers by braiding or spirally winding a filament member follow to obtain the low gas-permeable hose with the resin membrane of PVOH at the position in the thickness-direction of the hose.
Meanwhile, the resin membrane of PVOH may be formed in various coating methods other than the above dip coating method.
Anyway, as a matter of fact, a wall-thickness of the resin membrane of PVOH obtained is necessarily limited since the resin membrane of PVOH is formed in a coating process by being treated with a coating solution such as aqueous PVOH solution. Specifically, a wall-thickness of the resin membrane of PVOH obtained in one cycle of coating is typically about 10μm.

On the other hand, due to the reason that $CO_2$ refrigerant exhibits lower performance as a cooling medium compared to conventional refrigerants, in an air conditioner using such $CO_2$ refrigerant, a pressure inside a fluid path for conveying $CO_2$ refrigerant therethrough, namely an internal pressure of a hose necessarily becomes much higher than in conventional air conditioners.
For example, in a conventional air conditioner, an internal pressure during operation, namely a normal operation pressure is in a range of about 1.5MPa to about 2MPa, while in the air conditioner using $CO_2$ refrigerant, the normal operation pressure is about 15MPa, nearly ten times as high as that in the conventional air conditioner.

In the air conditioner using $CO_2$ refrigerant, the hose is swollen under a load of the high internal pressure, and accordingly a wall-thickness of the resin membrane of PVOH, namely a wall-thickness of the barrier layer becomes thinner. The resin membrane of PVOH is formed initially thin-walled. So, when the wall-thickness of the resin membrane of PVOH becomes further thinner as the hose is swollen, gas barrier properties of the resin membrane is lowered to a large extent. According to the circumstances, there is a problem that the resin membrane cannot exhibit sufficient gas barrier properties inherent in itself.

Although problems were described mainly with respect to a refrigerant conveying hose such as an air conditioner hose, these problems could commonly encounter in other hoses that should meet restraint requirements of gas permeation, for example, a fuel hose for which fuel permeation is of concern or other hoses for which low gas-permeability is required.

[Patent Document 1] Japanese Patent Number 3107404
[Patent Document 2] JP-A-2003-336774

Under the foregoing circumstances, it is an object of the present invention to provide a low gas-permeable hose where gas permeation resistance of a barrier layer of a rein membrane of PVOH is not degraded and the barrier layer is capable to exhibit the gas-permeation resistance sufficiently. The low gas-permeable hose thereby effectively restrains permeation of gas.

According to the present invention, there is provided a novel low gas-permeable hose in order to achieve the foregoing object. The low gas-permeable hose of the present invention comprises a multilayer structure including a) an inner rubber layer, b) a reinforcing multilayer portion laminated on an outer side of the inner rubber layer, c) an outer rubber layer laminated further on an outer side of the reinforcing multilayer portion, d) a resin layer defining an innermost layer, and e) a barrier layer laminated on an inner side of the inner rubber layer and on an outer side of the resin layer while being supported by the resin layer. The reinforcing multilayer portion includes a first reinforcing layer of a braided or spirally wound reinforcing filament member and a second reinforcing layer of a braided or spirally wound reinforcing filament member. The first reinforcing layer is disposed on an inner side of the second reinforcing layer. The barrier layer is a resin membrane of polyvinyl alcohol (PVOH) with permeation resistance to an internal fluid or gas of the internal fluid. The reinforcing multilayer portion has a cooperative reinforcing structure for ensuring the second reinforcing layer of reinforcement to the first reinforcing layer.
The barrier layer is preferably made of PVOH with a saponification degree equal to or higher than 90%. It is effective that the resin layer defining the innermost layer is made of a polyamide resin.

The cooperative reinforcing structure may be as follows. Namely, the first reinforcing layer has a braid or winding angle lower than a neutral angle and the second reinforcing layer has a braid or winding angle higher than the neutral angle. Here, the braid or winding angle of the first reinforcing layer is preferably in a range of 45° to lower than 55°, and the braid or winding angle of the second reinforcing layer is preferably in a range of higher than 55° to 60°.

The cooperative reinforcing structure may be as follows. Namely, a middle rubber layer or a thin-walled middle rubber layer is disposed between the first reinforcing layer and the second reinforcing layer. A wall-thickness of the middle rubber layer may be equal to or smaller than 0.3mm.

The cooperative reinforcing structure may be as follows. Namely, an adhesive layer is disposed between the first reinforcing layer and the second reinforcing layer for adhering the first reinforcing layer and the second reinforcing

layer.

The low gas-permeable hose according to the present invention may be adapted for a refrigerant conveying hose for conveying an internal fluid of a refrigerant such as carbon dioxide.

As stated above, for enhanced impermeability to an internal fluid, an innermost layer is defined by a resin layer, and a barrier layer is laminated on an outer side of the resin layer. The barrier layer is supported by the resin layer. The barrier layer is a resin membrane of PVOH, for example, with a saponification degree of 90% or higher. Low permeability to the internal fluid can be well ensured by using the resin membrane of PVOH with the saponification degree of 90% or higher. However, in a low gas-permeable hose including the barrier layer of PVOH resin membrane at a middle position in a thickness-direction of the hose and inside a reinforcing multilayer portion, permeation resistance to gas of the barrier layer of the PVOH resin membrane is lowered when the barrier layer is swollen radially outward under a high internal pressure acting on the hose during convey of the fluid. Because a membrane-thickness of the barrier layer is originally formed thin, when the barrier layer is swollen, the membrane-thickness is so decreased as to lower gas-permeation resistance of the hose. So, according to the present invention, a cooperative reinforcing structure is constructed in the reinforcing multilayer portion for ensuring a second reinforcing layer of a reinforcing action to a first reinforcing layer in order to minimize swelling of the barrier layer of PVOH, namely decreasing change of the membrane-thickness of the barrier layer under the internal pressure acting on the hose. Or, the cooperative reinforcing structure is constructed for ensuring a cooperative reinforcing action of the first reinforcing layer and the second reinforcing layer against the barrier layer.

Typically, in a reinforced hose provided with a reinforcing multilayer portion including an inner first reinforcing layer of a braided or spirally wound reinforcing filament member and an outer second reinforcing layer of a braided or spirally would reinforcing filament member, a middle layer such as rubber layer is interposed between the first reinforcing layer and the second reinforcing layer, and each of the first reinforcing layer and the second reinforcing layer has a braid or winding angle of a neutral angle (55°).

In the case that the first reinforcing layer and the second reinforcing layer have the braid or winding angles of the neutral angles, when an internal pressure acts on the hose during convey of the internal fluid, due to a diameter difference (dimensional difference in a diametrical direction thereof) between the first and the second reinforcing layers, the inner first reinforcing layer primarily serves to restrain the barrier layer of PVOH inside the reinforcing multilayer portion from being swollen, and the outer second reinforcing layer does not sufficiently exhibit reinforcing effects against swell of the barrier layer, namely restraining effects against swell of the barrier layer.

For this reason, a load is concentrated primarily on the inner first reinforcing layer under an action of the internal pressure, thread-broken is caused in the first reinforcing layer, and as a result, the barrier layer of PVOH cannot sufficiently restrained from being swollen.

According to the present invention, the cooperative reinforcing structure is constructed in the reinforcing multilayer portion for ensuring the second reinforcing layer of the reinforcing action with respect to the first reinforcing layer. Therefore, the second reinforcing layer as well as the first reinforcing layer can serve to effectively restrain the barrier layer of PVOH from being swollen. That is, according to the present invention, the hose can be provided with excellent low gas-permeability by high gas-permeation resistance of the barrier layer of PVOH and restraining effects of the reinforcing multilayer portion against swell of the barrier layer.

For example, in a low gas-permeable hose including an inner first reinforcing layer with a braid or winding angle lower than the neutral angle and an outer second reinforcing layer with a braid or winding angle higher than the neutral angle, when an internal pressure acts on the hose during convey of an internal fluid, the inner first reinforcing layer is radially expanded (however, very slightly), and moved close to the second reinforcing layer in a diametrical position, under the action of the internal pressure. On the other hand, during that time, the outer second reinforcing layer is radially contracted and moved close to the inner first reinforcing layer in a diametrical position, under the action of the internal pressure. As a result, the first reinforcing layer and the second reinforcing layer are situated closer to each other than situated originally, and a diameter difference between the first reinforcing layer and the second reinforcing layer is decreased. And, the first reinforcing layer and the second reinforcing layer cooperatively share the internal pressure acting on the hose to provide reinforcing effects, and the barrier layer of PVOH inside the reinforcing multilayer portion is effectively prevented from being swollen under the internal pressure. Therefore the barrier layer of PVOH is also prevented from decreasing permeation resistance due to decreasing change of its membrane thickness, and the permeation resistance to gas of an internal fluid by the barrier layer can be successfully ensured.

For example, in the low gas-permeable hose including a middle rubber layer formed thin-walled, for example, with a wall-thickness of 0.3mm or smaller, between the first and the second reinforcing layers, a diameter difference between the first reinforcing layer and the second reinforcing layer is small, and the first reinforcing layer and the second reinforcing layer are situated radially close to each other. In this low gas-permeable hose according to the present invention, the first reinforcing layer and the second reinforcing layer cooperatively share the internal pressure acting on the hose to provide reinforcing effects, and the barrier layer of PVOH inside the reinforcing multilayer portion is effectively restrained from being swollen under the internal pressure. Therefore the barrier layer of PVOH can be also prevented

from decreasing permeation resistance due to decreasing change of its membrane thickness, and the permeation resistance to gas of an internal fluid by the barrier layer can be successfully ensured.

In the present invention, the middle rubber layer preferably has the wall-thickness of 0.1mm or greater.
In the case that the middle rubber layer has the wall-thickness smaller than 0.1mm, when an internal pressure acts on the hose, reinforcing filament members of the first reinforcing layer and the second reinforcing layer are abraded by friction therebetween and partly broken according to the circumstances, and restraining effects of the first and the second reinforcing layers against deformation of the barrier layer are rather decreased.

By the way, the middle rubber layer may be formed thin-walled as stated above, but to a limited extent only. So, as the case may be, an adhesive layer is interposed between the first reinforcing layer and the second reinforcing layer for adhering the first and the second reinforcing layers to construct a cooperative reinforcing structure. In this structure, the diameter difference between the first and the second reinforcing layers can be more decreased. And, when an internal pressure acts on the hose, the first reinforcing layer and the second reinforcing layer can share the internal pressure more evenly, the second reinforcing layer can more effectively exhibit a reinforcing effect, and the barrier layer of PVOH inside the reinforcing multilayer portion can be advantageously prevented from being swollen. Thus the permeation resistance to gas of an internal fluid can be thereby successfully ensured. And, since the first reinforcing layer and the second reinforcing layer are adhered to each other in unitary relation and the reinforcing filament members in each of the first reinforcing layer and the second reinforcing layer are adhered to each other in unitary relation by the adhesive layer, the reinforcing filament members can be prevented from being abraded each other. So, at the same time, a problem that thread breakage (breakage of the reinforcing filament members) is caused by this abrasion can be also solved.

The low gas-permeable hose of the present invention is suitable for or effective as a refrigerant conveying hose for conveying a refrigerant of an internal fluid, in particular, a hose for conveying a carbon dioxide refrigerant.

And, in the low gas-permeable hose of the present invention, an innermost layer is made of resin, preferably made of a polyamide resin. This may further enhance gas-permeation resistance throughout the hose.

Now, the preferred embodiments of the present invention will be described in detail with reference to the drawings.

BRIEF DESCRIPTION OF THE DRAWINGS

Fig. 1 is a sectional view of a first low gas-permeable hose according to the present invention.

Fig. 2 is a view showing a multilayer structure of the first low gas-permeable hose.

Fig. 3 is a view for explaining an action of a reinforcing layer.

Fig. 4 is a view showing a multilayer structure of a second low gas-permeable hose according to the present invention.

Fig. 5 is a sectional view of a third low gas-permeable hose according to the present invention.

DETAILED DESCRIPTIONS OF THE PREFERRED EMBODIMENTS

In Fig. 1, reference numeral 10 indicates a first low gas-permeable hose that is suitable for a hose to be used under the normal operation pressure of 15MPa or higher, such as a refrigerant conveying hose, specifically a $CO_2$ refrigerant conveying hose. The low gas-permeable hose 10 comprises a multilayer structure including an innermost layer 12 of a resin layer, a barrier layer 14 of a resin membrane of PVOH on an outer side of the innermost layer 12, an inner rubber layer 16 on an outer side of the barrier layer 14, a reinforcing multilayer portion 17 on an outer side of rubber layer 16, and an outer rubber layer 24 that defines an outermost layer. The reinforcing multilayer portion 17 have a first reinforcing layer 18 and a second reinforcing layer 22.
Here, a middle rubber layer 20 is disposed between the first reinforcing layer 18 and the second reinforcing layer 22.

For the innermost layer 12, various resin materials may be used.
Here, the innermost layer 12 is preferably formed from a polyamide resin.
For example, the polyamide resin may be polyamide 6 (PA6), polyamide 66 (PA66), polyamide 99 (PA99), polyamide 610 (PA610), polyamide 612 (PA612), polyamide 11 (PA11), polyamide 912 (PA912). Polyamide 12 (PA12), copolymer of PA6 and PA66 (PA6/66), copolymer of PA6 and PA12 (PA6/12), or the like. Such polyamide resin may be used alone, or as a blend by combining two or more of these polyamide resins.
In particular, PA6 is suitable since PA 6 is excellent in adhesiveness of layers and permeation resistance (low-permeability) to a refrigerant.

Or, an alloy of PA or PA6 and modified polyolefin or maleic anhydride modified polyolefin is also suitable due to its low flexural modulus, excellent flexibility and excellent heat resistance. Specifically, suitable is Zytel ST series such as Zytel ST801, Zytel ST811, or Zytel ST811HS (all are trade names of products manufactured by DuPont).
A wall-thickness of the innermost layer 12 may be in a range of 0.02mm to 2.0mm.

The barrier layer 14 is the resin membrane of PVOH as stated above. Here, it is necessary to use PVOH having a saponification degree of 90% or higher.
PVOH is industrially prepared by saponifying (hydrolyzing) polyvinyl acetate. The saponification degree is determined by a value m and a value n in the following chemical formula (Chemical Formula 1).
Specifically, the saponification degree is percentage (%) calculated from the value m and the value n in the following formula (Mathematical Formula 1).
This saponification degree indicates a degree of hydrolysis. A fully hydrolyzed product or material, has a saponification degree of 100%.

Chemical Formula 1

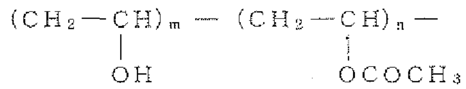

Mathematical Formula 1

$$\text{Saponification degree} : [m/(m+n)] \times 100$$

A product (polymer) with a high saponification degree has a high content of hydroxyl groups, and accordingly has an enhanced gas permeation resistance.
In the present embodiment, for the resin membrane of the barrier layer 14, PVOH with a saponification degree of 90% or higher should be used..
When PVOH with saponification degree lower than 90% is used, the barrier layer 14 is insufficient in permeation resistance to gas, particularly, the barrier layer 14 cannot be provided with permeation resistance (low permeability) to $CO_2$ refrigerant at a desired level.

The barrier layer 14 has a wall-thickness in a range of 5μm to 100μm.
When the wall-thickness of the barrier layer 14 is smaller than 5μm, the barrier layer 14 is insufficient in permeation resistance to gas and a pinhole is apt to be created in the barrier layer 14. On the contrary, when the wall-thickness of the barrier layer 14 is greater than 100μm, the resin membrane of the barrier layer 14 is too hard, and thereby the barrier layer 14 adversely affects flexibility of the hose, and there is a fear that a breakage (a crack) is caused in the barrier layer 14.

Meantime, since it is usually difficult to adhere the barrier layer 14 of a PVOH resin membrane directly to the innermost layer 12, an adhesive layer is disposed or formed between the innermost layer 12 and the barrier layer 14 to adhere the innermost layer 12 and the barrier layer 14 by the adhesive layer.
In this case, for example, an adhesive of the adhesive layer may be of a gum type, a urethane type, a polyester type, an isocyanate type, or an epoxy (resin) type. Each of the above types of adhesives may be used alone or as a blend by combining two or more of the above types of adhesives. However, the adhesive of the gum type is particularly suitable since it provides excellent adhesion properties between the innermost layer 12 and the barrier layer 14.

On the other hand, for the inner rubber layer 16 and the outer rubber layer 24, for example, a rubber material such as butyl rubber (IIR), halogenated butyl rubber (halogenated IIR) like chlorobutyl rubber (Cl-IIR) and bromobutyl rubber (Br-IIR), etc., acrylonitrile-butadiene-rubber (NBR), chloroplene rubber (CR), ethylene-propylene-diene-rubber (EPDM), ethylene-propylene rubber (EPM), fluoro rubber (FKM), epichlorohydrin-rubber (ECO), acrylic rubber, silicon rubber, chlorinated polyethylene (CPE) rubber, or urethane rubber may be preferably used. In particular, for the inner rubber layer 16, IIR and halogenated IIR are most suitable since IIR and halogenated IIR are excellent in resistant to

an external water. And, for the outer rubber layer 24, EPDM is particularly suitable in view of resistance to climate conditions.

Here, each of the rubber materials is usually used by suitably blending with a filler such as carbon black, a vulcanizing agent or various other compounding agents.

Meantime, the inner rubber layer 16 preferably has a wall-thickness in a range of 0.5mm to 5.0mm, and the outer rubber layer 24 preferably has a wall-thickness in a range of 0.5mm to 2.0mm.

For the first reinforcing layer 18 and the second reinforcing layer 22 stated above, for example, a reinforcing filament member such as polyethylene terephthalate (PET), polyethylene naphthalate (PEN), aramid, polyamide, vinylon, rayon, or a metal wire may be used. These filament members are spirally wound, braided or knitted to form the first reinforcing layer 18 and the second reinforcing layer 22.

For the middle rubber layer 20 between the first reinforcing layer 18 and the second reinforcing layer 22, the same material as stated above for the inner rubber layer 16 and the outer rubber layer 24 may be used.

The middle rubber layer 20 preferably has a wall-thickness in a range of 0.1mm to 0.5mm. More preferably, it is effective that the middle rubber layer 20 has a wall-thickness in a range of 0.3mm or smaller. When the middle rubber layer 20 has a wall-thickness greater than 0.3mm, a diameter difference or diametrical difference between the first reinforcing layer 18 and the second reinforcing layer 22 is too large. And, when an internal pressure acts on the hose 10, a load or a force is thereby exerted unequally on the first reinforcing layer 18 and the second reinforcing layer 22, and the internal pressure is not shared well by the first reinforcing layer 18 and the second reinforcing layer 22. Consequently, an effect of restraining the barrier layer 14 from being swollen is reduced, namely the barrier layer 14 is less restrained from being swollen, and there is a fear that the barrier layer 14 cannot sufficiently exhibit a gas permeation resistant performance.

On the other hand, the middle rubber layer 20 preferably has a wall-thickness of 0.1mm or greater. When the middle rubber layer 20 has a wall-thickness smaller than 0.1mm, the first reinforcing layer 18 and the second reinforcing layer 22 are situated too close to each other. And, when an internal pressure repeatedly acts on the hose 10, reinforcing filament members of the first reinforcing layer 18 and the second reinforcing layer 22 are thereby abraded by friction therebetween and partly broken (the reinforcing filament members are partly torn), and reinforcing effects of the first reinforcing layer 18 and the second reinforcing layer 22 are decreased.

In the present embodiment, a braid angle $\theta_1$ of the first reinforcing layer 18 as shown in Fig. 2 may be lower than a neutral angle (55°), while a braid angle $\theta_2$ of the second reinforcing layer 22 may be higher or greater than the neutral angle.

The braid angles $\theta_1$ ,$\theta_2$ of the reinforcing filament members of the first and second reinforcing layers 18, 22 are significant as follows.

As shown in row (b) of Fig. 3, in a reinforcing layer having a braid angle (braiding angle) equal to the neutral angle, the reinforcing layer changes neither in an axial direction nor a radial direction of a hose when an internal pressure acts on the hose.

On the other hand, as shown in row (c) of Fig. 3, in a reinforcing layer having a braid angle lower than the neutral angle, the reinforcing layer is radially expanded while being contracted in an axial direction of a hose under an action of an internal pressure.

On the contrary, as shown in row (a) of Fig. 3, in a reinforcing layer having a braid angle higher than the neutral angle, the reinforcing layer is radially contracted while being elongated in an axial direction of a hose under an action of an internal pressure.

Therefore, in this embodiment, when an internal pressure acts on the hose 10, the first reinforcing layer 18 is radially expanded as shown in row (c) of Fig. 3, while the second reinforcing layer 22 is radially contracted as shown in row (a) of Fig. 3.

As a result, under the action of the internal pressure, the first reinforcing layer 18 and the second reinforcing layer 22 are situated closer to each other out of original positions thereof by changes thereof in diametrical dimension.

For this reason, when a high internal pressure acts on the hose 10, the first reinforcing layer 18 and the second reinforcing layer 22 cooperatively share the internal pressure acting on the hose 10 and provide pressure resistant and reinforcing effects to restrain expansion and deformation of a layer on an inner side of the reinforcing multilayer portion 17, specifically of the barrier layer 14.

In the hose 10, in order for the first reinforcing layer 18 and the second reinforcing layer 22 to sufficiently provide the reinforcing effect as stated above, the braid angle $\theta_1$ of the first reinforcing layer 18 is preferably in a range of 45° to lower than 55°, more preferably in a range of 50° to lower than 54°.

The braid angle $\theta_2$ of the second reinforcing layer 22 is preferably in a range of higher than 55° to 60°.

However, in a second low gas-permeable hose 26 as shown in Fig. 4, braid angles $\theta_3$, $\theta_4$ of reinforcing filament members of a first reinforcing layer 28 and a second reinforcing layer 30 of a reinforcing multilayer portion 27 are equal to the neutral angle (55°). The second low gas-permeable hose 26 is constructed by modifying the braid angles of the reinforcing filament members of the first reinforcing layer 18 and the second reinforcing layer 22 of the first low gas-permeable hose 10, and is otherwise the same as the first low gas-permeable hose 10 (parts identical to those of the

hose 10 are indicated by reference numerals identical to those of the hose 10 in the Figure).

The hoses 10, 26 of the present embodiments are produced, for example, as follows.

First, the innermost layer 12 of a resin material is formed by extrusion, and the adhesive layer is formed on an outer surface of the innermost layer 12, for example, by coating or the like.

A coating fluid is prepared by dissolving PVOH powder in a warm water, and the coating fluid is applied on an outer surface of the innermost layer 12 (specifically, an outer surface of the adhesive layer), for example, by dipping the innermost layer 12 in the coating fluid (impregnating the innermost layer 12 with the coating fluid). Then, water of a solvent medium in the coating fluid is evaporated and removed by means of drying process, thereby a resin membrane of PVOH is formed on the outer surface of the innermost layer 12 with the adhesive layer interposed therebetween.

However, instead of dipping stated above, other means such as spraying, roll-coating, or brush-coating may be applied for formation of the resin membrane of PVOH.

A thickness of the resin membrane of PVOH obtained in this single coating cycle is about 10μm.

In order to further increase the thickness of the resin membrane, this coating cycle is repeated or concentration of PVOH water solution or PVOH coating fluid is increased.

After the barrier layer 14 of the PVOH resin membrane is laminated on the outer surface of the innermost layer 12 as stated above, in the common procedure, the inner rubber layer 16 is laminated on an outer surface of the barrier layer 14, the first reinforcing layer 18, 28 is braided over the inner rubber layer 16, the middle rubber layer 20 is extruded over the first reinforcing layer 18, 28, the second reinforcing layer 22, 30 is braided over the middle rubber layer 20, and finally, the outer rubber layer 24 is extruded over the second reinforcing layer 22, thereby an elongate extruded body or elongate body is obtained. Then, the elongate extruded body is vulcanized, cut into predetermined lengths, and the hose 10, 26 as shown in Figs. 1, 2 and 4 is obtained.

Meanwhile, an inner diameter of each of the hoses 10, 26 is about 5mm to 40mm.

Following is a specific example of structure of each layer of the hose 10.

Inner most layer 12

Material: PA6
Wall-thickness: 0.15 mm

Barrier layer 14 :

Material: PVOH resin with a saponification degree of 99%
Wall-thickness: 10μm

Inner rubber layer 16

Material: Br-IIR
Wall-thickness: 1.6mm

First reinforcing layer 18

Material and construction: Aramid yarns, braided
Braid angle $\theta_1$: 51°

Middle rubber layer 20

Material: EPDM
Wall-thickness: 0.3mm

Second reinforcing layer 22

Material and construction: Aramid yarn, braided
Braid angle $\theta_2$: 57°

Outer rubber layer 24

Material: EPDM
Wall-thickness: 1.0mm

And, following is a specific example of structure of each layer of the hose 26.

Inner most layer 12

Material: PA6
Wall-thickness: 0.15mm

Barrier layer 14 :

Material: PVOH resin with a saponification degree of 99%
Wall-thickness: 10μm

Inner rubber layer 16

Material: Br-IIR
Wall-thickness: 1.6mm

First reinforcing layer 28

Material and construction: Aramid yarns, braided
Braid angle $\theta_3$: Neutral angle

Middle rubber layer 20

Material: EPDM
Wall-thickness: 0.3mm

Second reinforcing layer 30

Material and construction: Aramid yarns, braided
Braid angle $\theta_4$: Neutral angle

Outer rubber layer 24

Material: EPDM
Wall-thickness: 1.0mm

In the first low gas-permeable hose 10 as stated above, the braid angle of the inner first reinforcing layer 18 is lower than the neutral angle, while the braid angle of the outer second reinforcing layer 22 is higher than the neutral angle, respectively. Therefore, when an internal pressure acts on the hose 10 during conveying a fluid, the inner first reinforcing layer 18 is radially expanded under the action of the internal pressure, and the first reinforcing layer 18 is moved close to the second reinforcing layer 22 in a diametrical position.

On the other hand, when the internal pressure acts on the hose 10, the outer second reinforcing layer 22 is radially contracted under the action of the internal pressure, and the second reinforcing layer 22 is moved also close to the inner first reinforcing layer 18 in the diametrical position.

As a result, the first reinforcing layer 18 and the second reinforcing layer 22 are situated radially closer to each other than originally situated, a diameter difference between the first reinforcing layer 18 and the second reinforcing layer 22 is decreased, the first reinforcing layer 18 and the second reinforcing layer 22 cooperatively share the internal pressure acting on the hose 10 to provide reinforcing effects, and effectively restrain the PVOH barrier layer 14 inside the reinforcing multilayer portion 17 from being swollen under the internal pressure.

Consequently, in the hose 10 of the present embodiment, the first reinforcing layer 18 and the second reinforcing layer 22 effectively restrain the PVOH barrier layer 14 from decreasing its membrane thickness resulted from swelling. Therefore, the PVOH barrier layer 14 is also prevented from decreasing permeation resistance due to decrease and change of its membrane thickness. Accordingly, the permeation resistance to gas of an internal fluid can be successfully ensured.

That is, the hose 10 of the present embodiment can be provided with an excellent low gas-permeable performance by high gas-permeation resistance of the PVOH barrier layer 14, and swell restraining effect of the first reinforcing layer 18, or the first reinforcing layer 18 and the second reinforcing layer 22 against the barrier layer 14.

And, in the first low gas-permeable hose 10 and the second low gas-permeable hose 26 as above, a diameter difference between the first reinforcing layer 18, 28 and the second reinforcing layer 22, 30 is small initially, and these first reinforcing layer 18, 28 and the second reinforcing layer 22, 30 cooperatively share the internal pressures acting on the hose 10, 26 to provide reinforcing effects, thereby the barrier layer 14 of PVOH inside the reinforcing multilayer portion 17 is effectively prevented from being swollen under the internal pressure.

The barrier layer 14 of PVOH is thereby prevented from decreasing permeation resistance due to decreasing change of a membrane thickness of the barrier layer 14. Hence, it is now possible to favorably ensure that the barrier layer 14 of PVOH exhibits permeation resistance to gas of an internal fluid.

In the first low gas-permeable hose 10, the first reinforcing layer 18 and the second reinforcing layer 22 are situated initially close to each other in a diametrical position. The middle rubber layer 20 is formed thinner than 0.3mm in wall-thickness. In addition, the first reinforcing layer 18 and the second reinforcing layer 22 are moved closer to each other under action of the internal pressure. Thereby the internal pressure acts more evenly on the first reinforcing layer 18 and the second reinforcing layer 22, and these first reinforcing layer 18 and the second reinforcing layer 22 provide higher swell restraining effects against the barrier layer 14.

And, in the hoses 10, 26 of these embodiments, gas-permeation resistance throughout the entire hoses 10, 26 is further enhanced since the innermost layer 12 is formed from PA resin.

In Fig. 5, reference numeral 32 indicates a third low gas-permeable hose according to the present invention. In the hose 10, 26 having the first reinforcing layer 18, 28 and the second reinforcing layer 22, 30, the first reinforcing layer 18, 28 and the second reinforcing layer 22, 30 are preferably situated as close as possible to each other to cooperatively share the internal pressure. Therefore, in the hose 10, 26, the wall-thickness of the middle layer 20 interposed between the first reinforcing layer 18, 28 and the second reinforcing layer 22, 30 is 0.3mm or smaller.

However, as long as the middle rubber layer 20 is interposed therebetween, the first reinforcing layer 18, 28 and the second reinforcing layer 22, 30 are situated close to each other only to a limited extent.

For this reason, in the third low gas-permeable hose 32, in place of such middle rubber layer 20, an adhesive layer 36 is interposed between the first reinforcing layer 18 and the second reinforcing layer 34 of a reinforcing multilayer portion 33 for adhering the first reinforcing layer 18 and the second reinforcing layer 36.

Here, a gum type adhesive is given for the adhesive layer 36 as an example. An adhesive of the same material as the inner rubber layer 16 or the outer rubber layer 38 is preferable in view of a good adhesion property. In the present embodiment, the gum adhesive of EPDM that is a material of the outer rubber layer 38, and the gum adhesive of butyl rubber that is a material of the inner rubber layer 16 are more preferable.

The adhesive layer 36 preferably has a wall-thickness in a range of 1$\mu$m to 10$\mu$m.

Although the second reinforcing layer 34 and the outer rubber layer 38 are sometimes slightly different from the second reinforcing layer 22 and the outer rubber layer 24 in diameter, the third low gas-permeable hose 32 is otherwise the same as the first low gas-permeable hose 10 (parts identical to those of the hose 10 are indicated by reference numerals identical to those of the hose 10 in the Figure). However, braid angles or spirally winding angles of the reinforcing filament members of the first reinforcing layer 18 and the second reinforcing layer 34 may be neutral angles, respectively. Needless to say, the third low gas-permeable hose 32 has the adhesive layer 36, in place of the middle rubber layer 20 of the first low gas-permeable hose 10.

The adhesive layer is, for example, formed as follows. A gum adhesion is prepared by dissolving a rubber material in a solvent such as toluene. A felt or the like is impregnated with the gum adhesion, and the gum adhesion is applied to the reinforcing filament members by rubbing the reinforcing filament members with the felt. And, the reinforcing filament members applied with the gum adhesion are braided or spirally wound to form the first reinforcing layer 18 and the second reinforcing layer 34.

In a subsequent vulcanization process, the gum adhesion is cured by itself, the reinforcing filament members in the first reinforcing layer 18 are cured and adhered to each other in unitary relation, the reinforcing filament members in the second reinforcing layer 34 are cured and adhered to each other in unitary relation, and the first reinforcing layer 18 and the second reinforcing layer 34 are cured and adhered to each other in unitary relation.

However, since the gum adhesive interposed between the first reinforcing layer 18 and the second reinforcing layer 34 has a certain elasticity after vulcanized, the adhesive layer 36 serves as a cushion therebetween. By cushioning and adhesion properties of the adhesive layer 36, the reinforcing filament members are effectively prevented from being abraded each other when an internal pressure repeatedly acts on the hose 32.

In this embodiment, a diameter difference between the first reinforcing layer 18 and the second reinforcing layer 34 may be largely decreased, and thereby the first reinforcing layer 18 and the second reinforcing layer 34 more cooperatively may share the internal pressure acting on the hose 32 to provide the hose 32 with an excellent reinforcing effect.

Therefore, in the present embodiment, the barrier layer 14 of PVOH inside the reinforcing multilayer portion 33 is prevented from being swollen and permeation resistance to gas of an internal fluid is well ensured.

Although the preferred embodiments have been described above, these are only some of embodiments of the

present invention.

For example, a low gas-permeable hose according to the present invention is suitable for a refrigerant conveying hose, in particular, a $CO_2$ refrigerant conveying hose. However, the low gas-permeable hose of the present invention may be adapted for other hoses for which a low gas-permeability is required. The present invention may be embodied by variety of modifications without departing from the scope of the invention.

## Claims

**1.** A low gas-permeable hose (10, 26, 32), comprising:

a) an inner rubber layer (16);
b) a reinforcing multilayer portion laminated on an outer side of the inner rubber layer (16), the reinforcing multilayer portion (17, 27, 33) including a first reinforcing layer (18, 28) of a braided or spirally wound reinforcing filament member and a second reinforcing layer (22, 30, 34) of a braided or spirally wound reinforcing filament member, the first reinforcing layer (18, 28) being disposed on an inner side of the second reinforcing layer (22, 30, 34);
c) an outer rubber layer (24, 38) laminated further on an outer side of the reinforcing multilayer portion (17, 27, 33);
d) a resin layer (12) defining an innermost layer; and
e) a barrier layer (14) laminated on an inner side of the inner rubber layer (16) and on an outer side of the resin layer (12) while being supported by the resin layer (12), the barrier layer (14) being a resin membrane of polyvinyl alcohol with permeation resistance to gas of an internal fluid;

wherein the reinforcing multilayer portion (17, 27, 33) has a cooperative reinforcing structure for ensuring the second reinforcing layer (22, 30, 34) of reinforcement to the first reinforcing layer (18, 28).

**2.** The low gas-permeable hose as set forth in claim 1, wherein in the cooperative reinforcing structure, the first reinforcing layer (18) has a braid or winding angle ($\theta_1$) lower than a neutral angle and the second reinforcing layer (22) has a braid or winding angle ($\theta_2$) higher than the neutral angle.

**3.** The low gas-permeable hose as set forth in claim 2, wherein the braid or winding angle ($\theta_1$) of the first reinforcing layer (18) is in a range of 45° to lower than 55°, and the braid or winding angle ($\theta_2$) of the second reinforcing layer (22) is in a range of higher than 55° to 60°.

**4.** The low gas-permeable hose as set forth in claim 1, wherein in the cooperative reinforcing structure, a thin-walled middle rubber layer (20) is disposed between the first reinforcing layer (18, 28) and the second reinforcing layer (22, 30).

**5.** The low gas-permeable hose as set forth in claim 4, wherein the wall-thickness of the middle rubber layer (20) is equal to or smaller than 0.3mm.

**6.** The low gas-permeable hose as set forth in claim 1, wherein in the cooperative reinforcing structure, an adhesive layer (36) is disposed between the first reinforcing layer (18) and the second reinforcing layer (34) for adhering the first reinforcing layer (18) and the second reinforcing layer (34).

**7.** The low gas-permeable hose as set forth in any one of claims 1 to 6,
wherein the barrier layer (14) is made of polyvinyl alcohol with a saponification degree equal to or higher than 90%.

**8.** The low gas-permeable hose as set forth in any one of claims 1 to 7,
wherein the internal fluid is a refrigerant, and the low gas-permeable hose (10, 26, 32) is a refrigerant conveying hose.

**9.** The low gas-permeable hose as set forth in claim 8, wherein the refrigerant is a carbon dioxide refrigerant.

**10.** The low gas-permeable hose as set forth in any one of claims 1 to 9,
wherein the resin layer (12) defining the innermost layer is made of a polyamide resin.

FIG.1

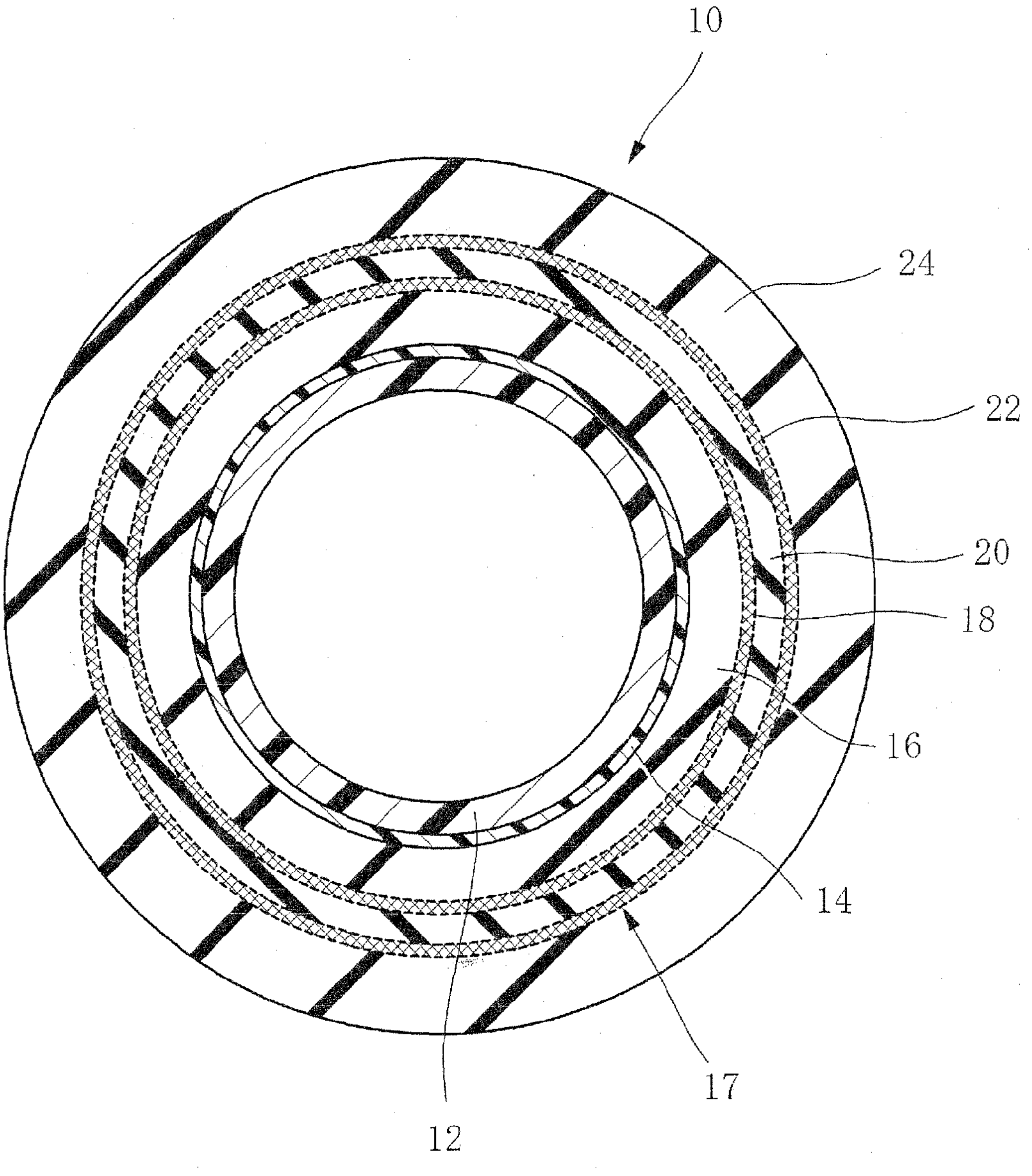

FIG.2

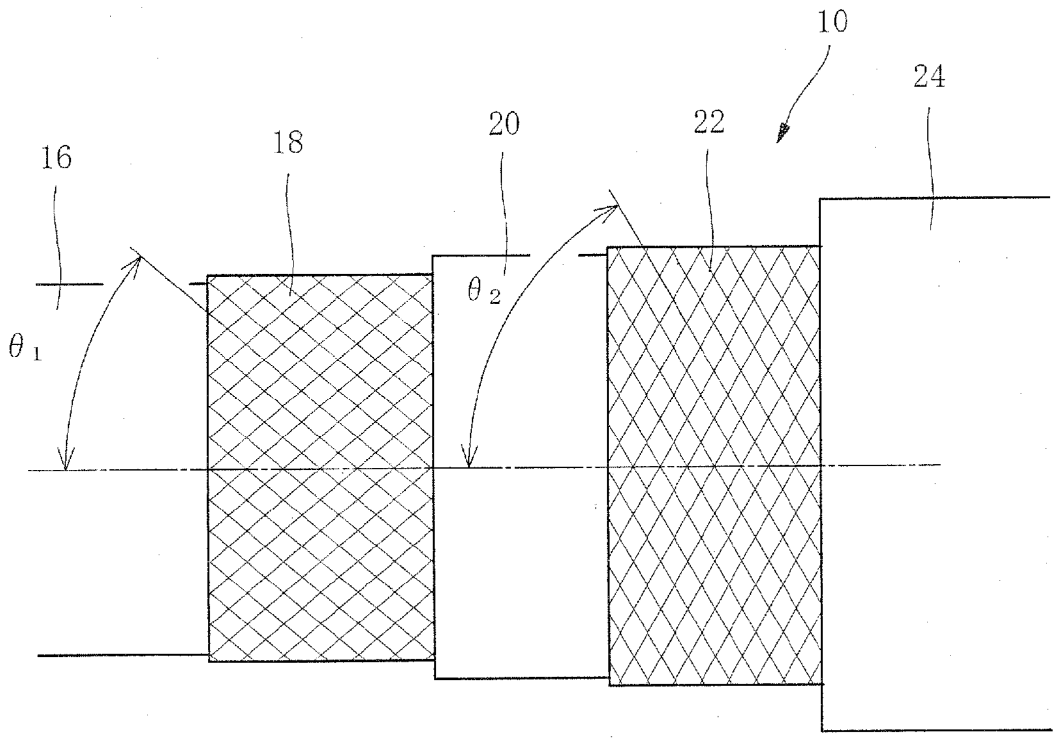

FIG.3

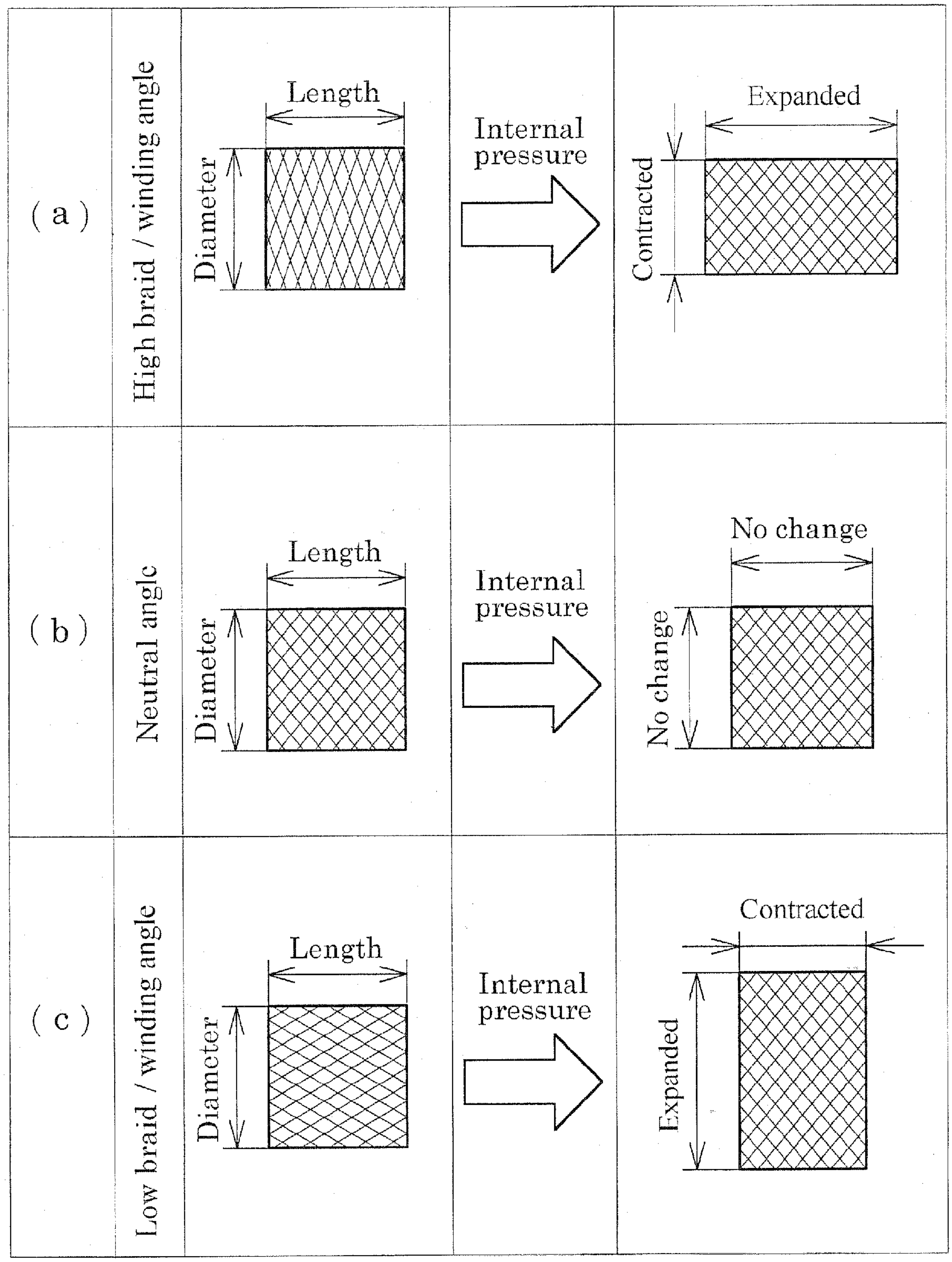
(a)
High braid / winding angle
Length
Diameter
Internal pressure
Expanded
Contracted
(b)
Neutral angle
Length
Diameter
Internal pressure
No change
No change
(c)
Low braid / winding angle
Length
Diameter
Internal pressure
Contracted
Expanded

FIG. 4

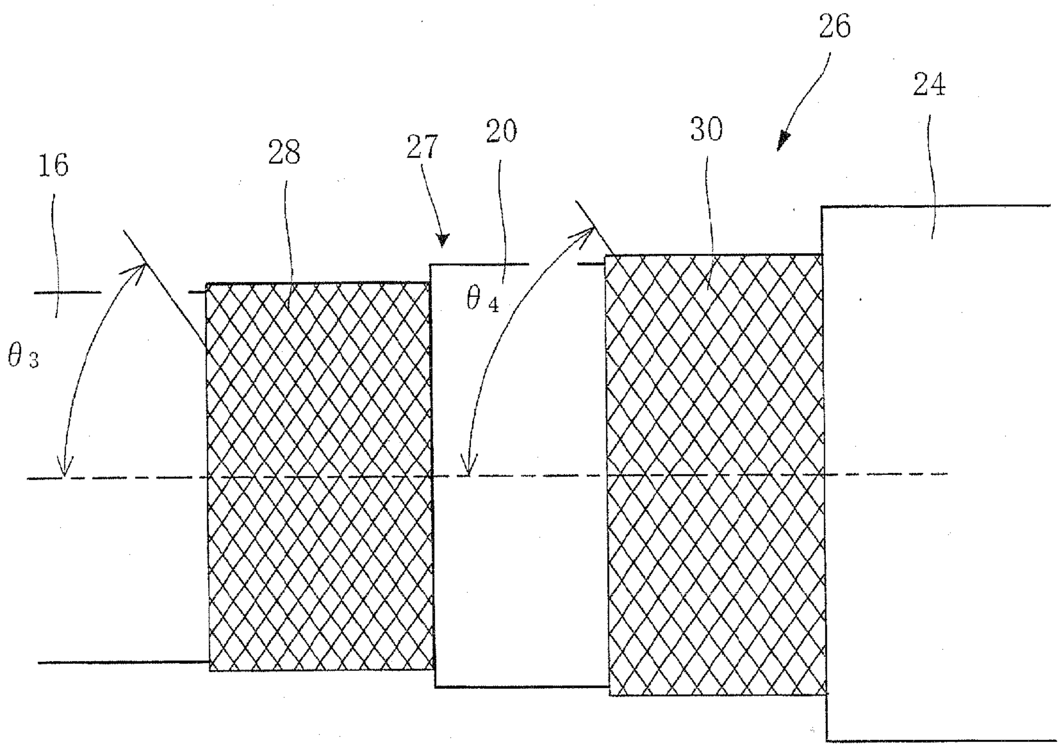

FIG.5

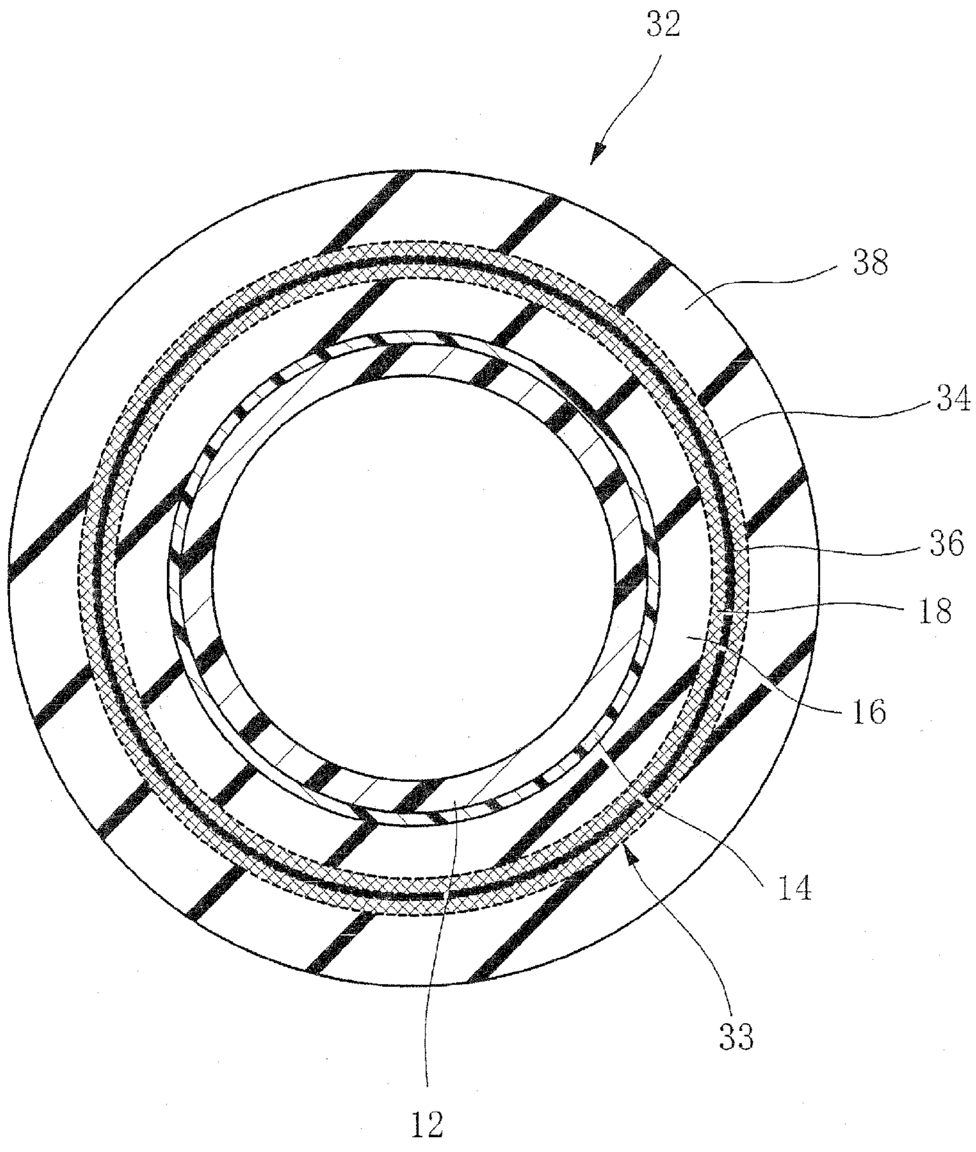

European Patent Office

# EUROPEAN SEARCH REPORT

Application Number
EP 08 15 3398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,A | US 2007/277896 A1 (TAKAGI YUJI [JP] ET AL) 6 December 2007 (2007-12-06)<br>* the whole document * | 1-10 | INV.<br>B32B1/08<br>F16L11/08 |
| A | EP 1 393 889 A (GOODYEAR TIRE & RUBBER [US]) 3 March 2004 (2004-03-03)<br>* paragraphs [0004] - [0009], [0017] - [0020] * | 1-10 | |
| A | US 6 085 799 A (KODAISSI ELIE [FR] ET AL) 11 July 2000 (2000-07-11)<br>* column 2, line 1 - column 3, line 25; figures * | 1-10 | |
| A | EP 1 126 204 A (TOKAI RUBBER IND LTD [JP]) 22 August 2001 (2001-08-22)<br>* claims; figures * | 1-10 | |
| A | EP 1 394 457 A (YOKOHAMA RUBBER CO LTD [JP]; YOKOHAMA HYDEX CO [JP]; NIHON MATAI COMPA) 3 March 2004 (2004-03-03)<br>* figures; example * | 1-10 | TECHNICAL FIELDS SEARCHED (IPC) |
| A | JP 2006 258128 A (DENSO CORP) 28 September 2006 (2006-09-28)<br>* abstract; figure 2a * | 1-10 | B32B<br>F16L |

The present search report has been drawn up for all claims

1

| Place of search | Date of completion of the search | Examiner |
|---|---|---|
| Munich | 27 June 2008 | Hutton, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 15 3398

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2008

| Patent document cited in search report | Publication date | Patent family member(s) | Publication date |
|---|---|---|---|
| US 2007277896 A1 | 06-12-2007 | DE 102007025089 A1 | 03-01-2008 |
| | | JP 2008008486 A | 17-01-2008 |
| EP 1393889 A | 03-03-2004 | BR 0303412 A | 08-09-2004 |
| | | CN 1488495 A | 14-04-2004 |
| | | MX PA03007254 A | 05-03-2004 |
| | | US 2004040607 A1 | 04-03-2004 |
| | | US 2004118469 A1 | 24-06-2004 |
| US 6085799 A | 11-07-2000 | CA 2243952 A1 | 31-07-1997 |
| | | DK 870144 T3 | 12-11-2001 |
| | | EP 0870144 A1 | 14-10-1998 |
| | | FR 2743858 A1 | 25-07-1997 |
| | | WO 9727416 A1 | 31-07-1997 |
| | | NO 983362 A | 21-09-1998 |
| EP 1126204 A | 22-08-2001 | DE 60103673 D1 | 15-07-2004 |
| | | DE 60103673 T2 | 16-06-2005 |
| | | JP 3903679 B2 | 11-04-2007 |
| | | JP 2001227681 A | 24-08-2001 |
| | | US 2001013374 A1 | 16-08-2001 |
| EP 1394457 A | 03-03-2004 | DE 60303542 T2 | 02-11-2006 |
| | | JP 2004092792 A | 25-03-2004 |
| | | TW 238877 B | 01-09-2005 |
| | | US 2004040609 A1 | 04-03-2004 |
| JP 2006258128 A | 28-09-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006151305 A
- JP 3107404 B
- JP 2003336774 A